# EUROPÄISCHE PATENTSCHRIFT

(11) **EP 1 557 587 B1**
(45) Veröffentlichungstag und Bekanntmachung des Hinweises auf die Patenterteilung: **13.10.2010**
(21) Anmeldenummer: 03025145.8
(22) Anmeldetag: 13.01.2004
(51) Int. Cl.: F16H 3/16, B61C 9/12

(54) **Triebwagen-Achsgetriebe**
Axle transmission for railway vehicle
Essieu moteur pour véhicule ferroviaire

(43) Veröffentlichungstag der Anmeldung: 27.07.2005
(73) Patentinhaber: ZF FRIEDRICHSHAFEN Aktiengesellschaft, 88038 Friedrichshafen (DE)
(72) Erfinder: Enödy, Emil, 81476 München (DE); Gratz, Mathias, 88048 Friedrichshafen (DE)

(56) Entgegenhaltungen:
- EP-A1- 0 965 774
- DE-C- 903 094
- DE-C- 928 232
- GB-A- 1 438 620
- US-A- 2 589 844
- US-A- 4 148 262

## Beschreibung

Die Erfindung betrifft ein Triebwagen-Achsgetriebe nach dem Oberbegriff des Hauptanspruchs sowie einen Triebwagen damit.

Bei angetriebenen Achsen von schienengebundenen Triebwagen werden Achsgetriebe eingesetzt, welche von einer in Fährzeug-Längsrichtung ausgerichteten Gelenkwelle angetrieben werden und die Antriebsleistung auf eine Radsatzachse übertragen, welche zwischen einem linken und einem rechten angetriebenen Schienenrad angeordnet ist. Die Gelenkwelle kann dabei direkt von einem Antriebsmotor angetrieben werden oder von einem Getriebe mit veränderlicher Übersetzung, welches zwischen der Gelenkwelle und dem Antriebsmotor angeordnet ist. Die Drehachse der Eingangswelle des Achsgetriebes bzw. der Gelenkwelle verläuft oberhalb der Radsatzachse. Die Eingangswelle treibt ein erstes Stirnrad, welches in ständigem Zahneingriff mit einem zweiten Stirnrad ist, welches auf einer Kegelritzelwelle angeordnet ist. Das Kegelritzel der Kegelritzelwelle ist im Zahneingriff mit einem auf der Radsatzachse angeordneten, abtriebsseitigen Kegelrad. Die Eingangswelle und die Kegelritzelwelle sind übereinander oder schräg übereinander angeordnet, so dass sie zumindest eine vertikale Achsabstandskomponente aufweisen. In vielen Fällen ist die Stirnradstufe Teil eines schaltbaren Stirnrad-Wendegetriebes, das einen Vorwärtsund einen Rückwärtsgang aufweist.

Ein derartiges Getriebe ist in der gattungsbildenden EP 0 965 774 B1 offenbart.

Üblicherweise ist ein derartiges Triebwagen-Achsgetriebe zwischen den linken und rechten Antriebsrädern unterflurig, d. h. unterhalb des Fahrzeugbodens, welcher als Flur dient, eingebaut. Der Fahrzeugboden muß in vielen Fällen im Bereich der Achsgetriebe höher sein, um die Achsgetriebe unterbringen zu können. Es wird jedoch angestrebt, die Stufe im Fahrzeugboden so niedrig wie möglich zu halten. Die Höhe, in welcher das Achsgetriebe im Fahrzeug positioniert wird, ist bestimmt durch den Schienenrad-Durchmesser bzw. die Höhe der Radsatzachse, auf welcher das abtriebsseitige Kegelrad des Achsgetriebes angeordnet ist. Damit die Gelenkwelle, welche mit der Eingangswelle des Achsgetriebes verbunden ist, oberhalb der Radsatzachse geführt werden kann, muß die Eingangswelle gegenüber der Kegelritzelwelle einen gewissen Mindest-Achsabstand aufweisen. Sollen jedoch hohe Drehmomente übertragen werden, wird der Mindest-Achsabstand zwischen der Eingangswelle und der Kegelritzelwelle bei vorgegebener Übersetzung durch die zu übertragenden Drehmomente bestimmt. Dies kann bei bekannten Achsgetrieben zur Folge haben, dass die Eingangswelle höher liegt als es erforderlich wäre, damit der Antrieb über das Gehäuse um die Rad-satzachse geführt werden kann. Entsprechend der größeren vertikalen Achsabstandskomponente zwischen Eingangswelle und Ritzelwelle ist der vom Getriebegehäuse nach oben eingenommene Bauraum größer, so dass der Fahrzeugboden höher angeordnet werden müßte, was aus ergonomischen Gründen unerwünscht ist.

Der Erfindung liegt daher die Aufgabe zugrunde, ein Achsgetriebe anzugeben, bei dem, verglichen mit bekannten Achsgetrieben, eine höhere Übertragungsfähigkeit bei gleichem vertikalen Bauraum erzielt wird bzw. die gleiche Übertragungsfähigkeit bei einem kleineren vertikalen Bauraum.

Diese Aufgabe wird erfindungsgemäß dadurch gelöst, dass das Kegelritzel gegenüber dem abtriebsseitigen Kegelrad einen Achsversatz nach unten aufweist, um den vertikalen Abstand zwischen der Radsatzachse und der Drehachse der Eingangswelle zu verringern. Der vom Getriebe eingenommene vertikale Bauraum wird um den Betrag des Achsversatzes reduziert. Dennoch ist zwischen der Eingangswelle und der Kegelritzelwelle ein großer Achsabstand vorhanden, der für die Übertragung von hohen Drehmomenten erforderlich ist und die gewünschte Übersetzung sichert.

In einer vorteilhaften Ausgestaltung der Erfindung sind das Kegelritzel und das abtriebsseitige Kegelrad hypoidverzahnt und weisen einen sogenannten Plus-Achsversatz auf. In diesem Fall ist der Schrägungswinkel des Ritzels um einen vom Achsversatz abhängigen Betrag größer als der Schrägungswinkel des Tellerrades. Dies hat einen größeren Durchmesser des Kegelritzels und einen höheren Überdeckungsgrad der Verzahnungen zur Folge, wodurch einerseits die Übertragungsfähigkeit erhöht wird und andererseits Verzahnungsgeräusche reduziert werden.

In einer vorteilhaften Ausgestaltung der Erfindung weisen die Eingangswelle und die Kegelritzelwelle neben der vertikalen Achsabstandskomponente auch eine horizontale Achsabstandskomponente auf, so dass die Eingangswelle schräg über der Kegelritzelwelle verläuft. Bei dieser Ausgestaltung der Erfindung ist der Achsabstand zwischen der Eingangswelle und der Kegelritzelwelle - bei gleicher vertikaler Bauhöhe des Getriebes - vergrößert. Die horizontale Achsabstandskomponente kann jedoch nicht beliebig vergrößert werden, da auch der Bauraum links und rechts der Fahrzeuglängsachse begrenzt ist.

Ein Triebwagen, welcher mit einem erfindungsgemäßen Triebwagen-Achsgetriebe ausgestattet ist, welches unterhalb des Triebwagen-Bodens angeordnet ist, zeichnet sich durch die geringe Flurhöhe im Bereich des Achsgetriebes aus. Der Triebwagen-Boden kann um einen weiteren Betrag tiefer verlaufen, wenn er im Bereich der höchsten Stelle des Achsgetriebegehäuses eine Ausnehmung aufweist, in die das Achsgetriebegehäuse von unten hineinragt.

In bezug auf eine geringe Belastung der Eingangswelle und der Gelenkwelle bei Kurvenfahrt ist es vorteilhaft, das Achsgetriebe so zwischen einem linken und rechten Schienenrad auf der Radsatzachse anzuordnen, dass die Eingangswelle des Achsgetriebes im Bereich der Fahrzeugmitte liegt.

Anhand der beiliegenden Figuren'wird die Erfindung näher erläutert.
Darin zeigen:
- Fig. 1: eine Schnitt-Darstellung eines erfindungsgemäßen Triebwagen-Achsgetriebes und
- Fig. 2: eine Seiten-Ansicht eines erfindungsgemäßen Triebwagen-Achsgetriebes.

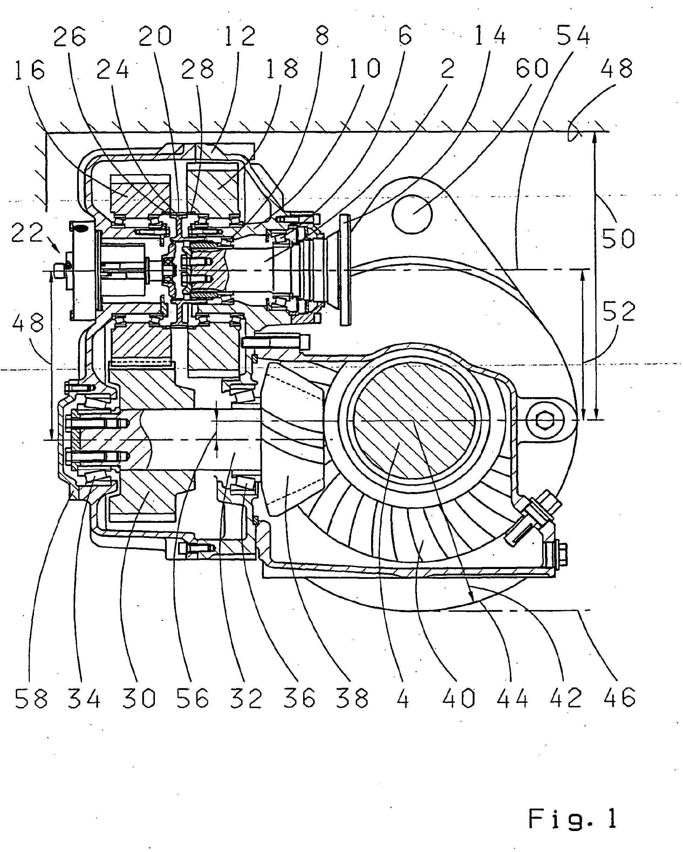

In Fig. 1 ist mit 2 die Eingangswelle des Achsgetriebes und mit 4 die geschnittene Radsatzachse bezeichnet, welche orthogonal zur Zeichnungsebene verläuft. Die Eingangswelle 2 ist mittels zweier Kegelrollenlager 6, 8 drehbar in einem Stutzen 10 des Getriebegehäuses 12 gelagert. An ihrem äußeren Ende weist sie einen Flansch 14 auf, der zur Befestigung einer nicht dargestellten Gelenkwelle vorgesehen ist, welche in Verlängerung der Eingangswelle verläuft und mit dem Antriebsmotor bzw. einem zwischengeschalteten Stufenwechselgetriebe verbunden ist. Koaxial zur Eingangswelle 2 sind zwei Stirnräder 16, 18 angeordnet. Die Schiebemuffe 20 ist mittels einer Verzahnung drehfest, jedoch axial verschiebbar, auf der Eingangswelle 2 angeordnet. Sie ist von einer pneumatischen Schalteinrichtung 22 betätigbar. In ihrer linken Endlage greift die Schiebemuffe 20 mit ihrer Außenverzahnung 24 in eine Innenverzahnung 26 des linken Stirnrads, in ihrer rechten Endlage in eine Innenverzahnung 28 des rechten Stirnrads 18 ein, so dass wahlweise das erste Stirnrad 16 oder das zweite Stirnrad 18 von der Eingangswelle 2 drehantreibbar ist. Die beiden Stirnräder 16, 18 sind jeweils mit einem Paar von Kegelrollenlagern auf Gehäusestutzen gelagert. Die Schalteinrichtung 22 ist mit ihrem inneren Teil radial innerhalb des Stirnrads 16 angeordnet. Das Stirnrad 16 ist in ständigem Zahneingriff mit dem auf der Kegelritzelwelle angeordneten Stirnrad 30. Die triebliche Verbindung zwischen dem Stirnrad 18 und dem Stirnrad 30 wird durch eine nicht dargestellte Zwischenwelle hergestellt, auf der zwei Stirnräder angeordnet sind, von denen eines mit dem Stirnrad 18 und das andere mit dem Stirnrad 30 kämmen. Das Stirnrad 30 ist drehfest auf der Kegelritzelwelle 32 angeordnet, welche durch die Kegelrollenlager 34, 36 drehbar im Getriebegehäuse 12 gelagert ist. Das Kegelritzel 38 ist in ständigem Zahneingriff mit dem abtriebsseitigen Kegelrad 40, welches auf der Radsatzwelle 4 sitzt und diese antreibt.

Das Getriebegehäuse 12 ist im Bereich der Kegelritzelwelle 32 durch einen Deckel 58 verschlossen. Es ist möglich, zwei sich gegenüberliegende Achsgetriebe in einem Drehgestell miteinander zu koppeln, indem die Kegelritzelwellen 32 durch eine Gelenkwelle trieblich miteinander zu verbinden sind.

Das Auge 60 im Getriebegehäuse 12 ist zur Befestigung einer Drehmomentenstütze zum Drehgestell vorgesehen.

Die Höhe der Radsatzachse 4 ist festgelegt durch den Radius 42 des Schienenrads 44. Die Schienenebene ist mit 46 bezeichnet. Der Achsabstand 48 zwischen der Eingangswelle und der Ritzelwelle ist zur Übertragung eines vorgegebenen Drehmoments bei vorgegebener Übersetzung erforderlich und kann nicht weiter reduziert werden. Der oberhalb der Radsatzachse bis zur Unterkante des Fahrzeugbodens 48 reichende Bauraum 50 bzw. der vertikale Abstand 52 zwischen der Radsatzachse 4 und der Drehachse 54 der Eingangswelle 2 ist beim erfindungsgemäßen Achsgetriebe um den Betrag des Achsversatzes 56 kleiner. Die Kegelritzelwelle ist um den Achsversatz 56 gegenüber der Drehachse des abtriebsseitigen Kegelrads 40 nach unten versetzt. Das Kegelritzel 38 und das abtriebsseitige Kegelrad 40 sind hypoidverzahnt und weisen einen Plus-Achsversatz auf.

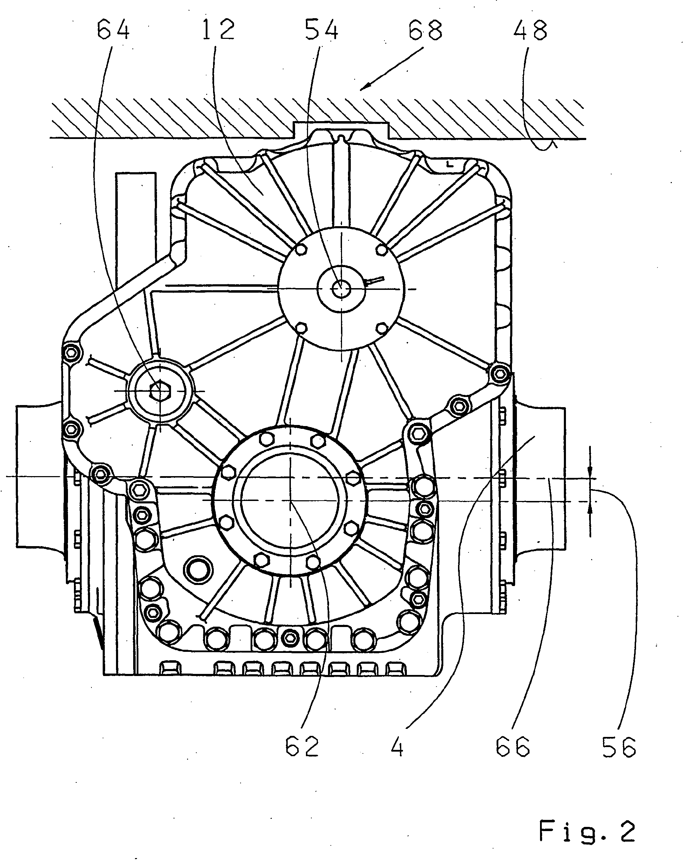

In Fig. 2 ist die Drehachse der Eingangswelle mit 54, die Drehachse der Kegelritzelwelle 32 mit 62, die Drehachse der Zwischenwelle mit 64 und die Drehachse der Radsatzachse 4 mit 66 bezeichnet. Die Drehachse 54 der Eingangswelle 2 weist gegenüber der Drehachse 62 der Ritzelwelle 32 neben der vertikalen Achsabstandskomponente auch eine horizontale Achsabstandskomponente auf, ist also schräg darüber angeordnet.

Die Höhe des Fahrzeugbodens 48 wird einerseits durch den Achsversatz 56 reduziert. Darüber hinaus ist der Triebwagen-Boden im Bereich der höchsten Stelle des Getriebegehäuses 10 mit einer Ausnehmung 68 versehen, in welche das Getriebegehäuse 10 von unten hineinragt. Die Geometrie der Ausnehmung ist minimiert und an das Stirnrad 18 angepasst.

### Bezugszeichen

- 2: Eingangswelle
- 4: Radsatzachse
- 6: Lager
- 8: Lager
- 10: Stutzen
- 12: Getriebegehäuse
- 14: Flansch
- 16: Stirnrad
- 18: Stirnrad
- 20: Schiebemuffe
- 22: Schalteinrichtung
- 24: Außenverzahnung
- 26: Innenverzahnung
- 28: Innenverzahnung
- 30: Stirnrad
- 32: Kegelritzelwelle
- 34: Lager
- 36: Lager
- 38: Kegelritzel
- 40: Kegelrad
- 42: Radius
- 44: Schienenrad
- 46: Schienenebene
- 48: Achsabstand
- 50: Bauraum
- 52: Achsabstand
- 54: Drehachse
- 56: Achsversatz
- 58: Deckel
- 60: Auge
- 62: Drehachse
- 64: Drehachse
- 66: Drehachse

## Patentansprüche

1. Triebwagen-Achsgetriebe mit einer eingangsseitigen Stirnradstufe und einer abtriebsseitigen Kegelradstufe, wobei ein erstes Stirnrad (16) der Stirnradstufe von einer koaxialen Eingangswelle (2) drehantreibbar in einem Getriebegehäuse (12) gelagert ist und sich in ständigem Zahneingriff mit einem zweiten Stirnrad (30) der Stirnradstufe befindet, welches auf einer Kegelritzelwelle (32) angeordnet ist, deren Kegelritzel (38) in Zahneingriff mit einem auf einer Radsatzachse (4) angeordneten, abtriebsseitigen Kegelrad (40) ist, wobei die Eingangswelle (2) und die Kegelritzelwelle (32) zumindest eine vertikale Achsabstandskomponente (48) aufweisen, und die Drehachse (54) der Eingangswelle (2) sich im Winkel zur und in einem vertikalen Abstand (52) oberhalb der Radsatzachse (4) erstreckt, **dadurch gekennzeichnet, dass** das Kegelritzel (38) gegenüber dem abtriebsseitigen Kegelrad (40) einen Achsversatz (56) nach unten aufweist, um den vertikalen Abstand (52) zwischen der Radsatzachse (4) und der Drehachse (54) der Eingangswelle (2) zu verringern.

2. Triebwagen-Achsgetriebe nach Anspruch 1, **dadurch gekennzeichnet, dass** das Kegelritzel (38) und das abtriebsseitige Kegelrad (40) hypoidverzahnt sind und einen Plus-Achsversatz aufweisen.

3. Triebwagen-Achsgetriebe nach Anspruch 1 oder 2, **dadurch gekennzeichnet, dass** die Eingangswelle (2) und die Kegelritzelwelle (32) neben der vertikalen Achsabstandskomponente auch eine horizontale Achsabstandskomponente aufweisen.

4. Triebwagen mit einem Triebwagen-Achsgetriebe nach einem der Ansprüche 1 bis 3, welches unterhalb eines Triebwagen-Bodens (48) angeordnet ist.

5. Triebwagen nach Anspruch 4, **dadurch gekennzeichnet, dass** der Triebwagen-Boden (48) im Bereich der höchsten Stelle des Getriebegehäuses (12) eine Ausnehmung (68) aufweist, in die das Getriebegehäuse (12) von unten hineinragt.

6. Triebwagen nach Anspruch 4 oder 5, **dadurch gekennzeichnet, dass** das Achsgetriebe so zwischen einem linken und rechten Rad auf der Radsatzachse (4) angeordnet ist, dass die Eingangswelle (2) des Achsgetriebes im Bereich der Fahrzeugmitte liegt.

## Claims

1. Rail car axle transmission having an input-side spur gear stage and an output-side conical gear stage, wherein a first spur gear (16) of the spur gear stage is mounted in a transmission housing (12) so as to be capable of being driven in rotation by a coaxial input shaft (2) and is in continuous tooth engagement with a second spur gear (30) of the spur gear stage, which second spur gear (30) is arranged on a bevel pinion shaft (32), the bevel pinion (38) of which is in toothed engagement with an output-side bevel gear (40) which is arranged on a gear set axle (4), wherein the input shaft (2) and the bevel pinion shaft (32) have at least one vertical axle spacing component (48), and the rotational axle (54) of the input shaft (2) extends at an angle to, and at a vertical distance (52) above, the gear set axle (4), **characterized in that** the bevel pinion (38) has a downward axial offset (56) with respect to the output-side bevel gear (40) in order to reduce the vertical distance (52) between the gear set axle (4) and the rotational axle (54) of the input shaft (2).

2. Rail car axle transmission according to Claim 1, **characterized in that** the bevel pinion (38) and the output-side bevel gear (40) have hypoid toothing and a positive axle offset.

3. Rail car axle transmission according to Claim 1 or 2, **characterized in that** the input shaft (2) and the bevel pinion shaft (32) also have a horizontal axial spacing component in addition to the vertical axial spacing component.

4. Rail car having a rail car axle transmission according to one of Claims 1 to 3, which is arranged underneath a rail car floor (48).

5. Rail car according to Claim 4, **characterized in that** the rail car floor (48) has a recess (68) in the region of the highest position of the transmission housing (12), into which the transmission housing (12) projects from below.

6. Rail car according to Claim 4 or 5, **characterized in that** the axle transmission is arranged between a left-hand and a right-hand gear on the gear set axle (4) in such a way that the input shaft (2) of the axle transmission lies in the region of the centre of the vehicle.

## Revendications

1. Entraînement d'essieu pour motrice, comprenant un étage à pignon droit du côté de l'entrée et un étage à roue conique du côté de la sortie, un premier pignon (16) de l'étage à pignon droit étant monté de manière à pouvoir être entraîné en rotation par un arbre d'entrée coaxial (2) dans un boîtier de transmission (12), et se trouvant en engagement d'engrènement constant avec un deuxième pignon droit (30) de l'étage à pignon droit, qui est disposé sur un arbre à pignon conique (32) dont le pignon conique (38) est en engagement d'engrènement avec une roue conique (40) du côté de la sortie, disposée sur un essieu de roues (4), l'arbre d'entrée (2) et l'arbre à pignon conique (32) présentant au moins une composante verticale d'entraxe (48), et l'axe de rotation (54) de l'arbre d'entrée (2) s'étendant suivant un certain angle par rapport à l'essieu de roues (4) et à distance verticale (52) au-dessus de celui-ci, **caractérisé en ce que** le pignon conique (38) présente, par rapport à la roue conique (40) du côté de la sortie, un décalage axial (56) vers le bas, afin de réduire la distance verticale (52) entre l'essieu de roues (4) et l'axe de rotation (54) de l'arbre d'entrée (2).

2. Entraînement d'essieu pour motrice selon la revendication 1, **caractérisé en ce que** le pignon conique (38) et la roue conique (40) du côté de la sortie, sont en prise par engrènement hypoïde et présentent un décalage axial positif.

3. Entraînement d'essieu pour motrice selon la revendication 1 ou 2, **caractérisé en ce que** l'arbre d'entrée (2) et l'arbre à pignon conique (32) présentent, en plus de la composante verticale d'entraxe, également une composante horizontale d'entraxe.

4. Motrice avec un entraînement d'essieu pour motrice selon l'une quelconque des revendications 1 à 3, qui est disposé en dessous d'un plancher (48) de motrice.

5. Motrice selon la revendication 4, **caractérisée en ce que** le plancher (48) de motrice présente dans la région du point le plus haut du boîtier de transmission (12), un évidement (68) dans lequel pénètre par le dessous le boîtier de transmission (12).

6. Motrice selon la revendication 4 ou 5, **caractérisée en ce que** l'entraînement d'essieu est disposé entre une roue gauche et une roue droite sur l'essieu de roues (4) de telle sorte que l'arbre d'entrée (2) de l'entraînement d'essieu se trouve dans la région du centre du véhicule.
